# EUROPÄISCHE PATENTSCHRIFT

(11) **EP 4 018 104 B1**
(45) Veröffentlichungstag und Bekanntmachung des Hinweises auf die Patenterteilung: **23.07.2025**
(21) Anmeldenummer: 20761184.9
(22) Anmeldetag: 20.08.2020
(51) Int. Cl.: F16C 19/38, F03D 80/70, F16C 33/66, F16C 33/78

(54) **ROTORLAGER FÜR EINE WINDENERGIEANLAGE UND WINDENERGIEANLAGE**
A WIND TURBINE BEARING AND WIND TURBINE
PALIER POUR UN ROTOR D'ÉOLIENNE ET UNE ÉOLIENNE

(30) Priorität: 22.08.2019 DE 102019212629
(43) Veröffentlichungstag der Anmeldung: 29.06.2022
(73) Patentinhaber: thyssenkrupp rothe erde Germany GmbH, 44137 Dortmund (DE); thyssenkrupp AG, 45143 Essen (DE)
(72) Erfinder: CAMPE, Björn, 59510 Lippetal-Schoneberg (DE); ELFERT, Gunther, 59597 Erwitte (DE); ROLLMANN, Jörg, 59558 Lippstadt (DE); LÜNEBURG, Bernd, 45481 Mülheim (DE); FRONING, Stephan, 58239 Schwerte (DE)
(74) Vertreter: thyssenkrupp Intellectual Property GmbH
(86) Internationale Anmeldenummer: PCT/EP2020/073344
(87) Internationale Veröffentlichungsnummer: WO 2021/032843

(56) Entgegenhaltungen:
- WO-A1-2012/136632
- DE-A1- 102017 107 553
- JP-A- 2009 036 241
- US-B1- 6 464 399

## Beschreibung

### Stand der Technik

Die Erfindung betrifft ein Rotorlager für eine Windenergieanlage nach dem Oberbegriff des Anspruchs 1 sowie eine Windenergieanlage nach dem Oberbegriff des Anspruchs 16.

Rotorlager von Windenergieanlagen dienen dazu, die Kräfte und Momente der drehenden Rotornabe in den Turm und in das Fundament der Windenergieanlage abzuleiten und gleichzeitig eine Drehmomentübertragung in den Antriebsstrang zum Generator hin zu ermöglichen. Das Rotorlager kann dabei als ein Momentenlager oder als mehrere verteilte Lagerbeispielsweise als angestellte Kegelrollenlager oder Fest-Los-Lager - ausgebildet sein.

Aufgrund der hohen von der Rotornabe zu übertragenden Kräfte und Momente ist es bei den vorgenannten Lagerungen konstruktionsbedingt vorteilhaft, wenn der Außenring mit der drehenden Rotornabe verbunden ist und der feststehende Innenring mit dem Maschinenhaus - der Gondel - verbunden ist. Derartige Lagerungen werden in der Regel als fettgeschmierte Rotorlager ausgeführt, da das Fett eine unterstützende Dichtwirkung bereitstellt. Für Ölschmierungen konnte gerade bei außenlaufenden Rotorlagern, bislang keine zufriedenstellende Abdichtung erzielt werden. Vorteile einer Ölschmierung bestehen zum einen darin, dass das Öl bei einer Umlaufschmierung gefiltert werden kann, so dass Überrollungen von im Schmierstoff befindlichen Partikeln reduziert werden, und zum anderen in der Möglichkeit einer aktiven Temperierung des Öls, so dass die Temperatur des Lagers besser eingestellt und gegebenenfalls auf andere, zusätzliche Kühl-/Heizsysteme verzichtet werden kann.

So ist aus DE 10 2017 107 553 A1 zur Lagerung des Rotors einer Windenergieanlage ein Kegelrollenlager mit einem Innenring, einem Außenring und zwei Reihen von Kegelrollen, die in einer O-Anordnung zwischen dem Innenring und dem Außenring angeordnet sind, bekannt. Der Spalt zwischen Innenring und Außenring ist zumindest an einer Seite des Kegelrollenlagers durch eine Dichtungsanordnung abgedichtet, die eine drehfest an den Innenring angeschlossene Hauptdichtung sowie einen an den Außenring drehfest angeschlossenen Dichtungslaufring umfasst, wobei der Dichtungslaufring eine Dichtungslauffläche für die Hauptdichtung bildet.

Aus WO 2012/136632 A1 ist ein ölgeschmiertes Wälzlager zur Lagerung des Rotors einer Windkraftanlage bekannt mit einer Wellendichtung, die einen Wälzkörper aufnehmenden Lagerinnenraum von einer Lageraußenseite trennt, und mit einer Klemmanordnung zur axialen Fixierung der Wellendichtung, die einen Abfluss für Öl aufweist.

Nachteilig bei den beiden vorgenannten Wälzlagern ist, dass bei Verwendung von Öl als Schmiermittel, das auftretende Leckage-Öl nur bei feststehendem Außenring aufgefangen und abgeleitet werden kann. Beim Einsatz als Außenläufer kann bei den bekannten Lagern ein Austritt von Leckage-Öl in das Maschinenhaus nicht sicher vermieden werden.

JP 2009 036241 A beschreibt eine Dichtungsanordnung für ein Radlager, dessen Wasserdichtigkeit verbessert ist, ohne dessen Drehwiderstand zu erhöhen, oder die Einpress-Positionsgenauigkeit.

### Offenbarung der Erfindung

Aufgabe der Erfindung ist es daher, ein Rotorlager für eine Windenergieanlage und eine Windenergieanlage mit einem Rotorlager mit einer verbesserten Abdichtung eines ölgeschmierten Lagerinnenraums beim Einsatz als Außenläufer anzugeben.

Diese Aufgabe wird gelöst durch ein Rotorlager für eine Windenergieanlage mit den Merkmalen des Anspruchs 1 und eine Windenergieanlage mit den Merkmalen des Anspruchs 16.

Hierdurch wird ein Rotorlager für eine Windenergieanlage mit einem Innenring und einem gegenüber dem Innenring verdrehbaren Außenring geschaffen, bei dem Innenring und Außenring einen Lagerinnenraum begrenzen, in dem mindestens eine Reihe von zwischen den Lagerringen abrollbaren Wälzkörpern angeordnet ist. Das Rotorlager weist ferner Dichtungsanordnungen auf zur jeweils einseitigen Abdichtung des Lagerinnenraums, wobei mindestens eine der Dichtungsanordnungen eine drehfest an den Innenring angeschlossene erste Dichtung und einen drehfest an den Außenring angeschlossenen Dichtungslaufring aufweist. An dem Dichtungslaufring ist eine erste Dichtungslauffläche für die erste Dichtung ausgebildet. Erfindungsgemäß ist vorgesehen, dass an dem Innenring ein Ringaufsatz befestigt ist, der den Dichtungslaufring in radialer Richtung umgreift und eine zwischen dem Dichtungslaufring und dem Ringaufsatz wirkende zweite Dichtung vorgesehen ist, die einen zwischen einer radialen Außenfläche des Dichtungslaufrings und einer radialen Innenfläche des Ringaufsatzes ausgebildeten Ringraum begrenzt.

Das erfindungsgemäße Rotorlager ist dadurch mit einem zumindest zweistufigen Dichtsystem ausgestattet, dass durch die erste und die zweite Dichtung gebildet ist. Der zwischen der ersten und der zweiten Dichtung eingeschlossene Ringraum bildet einen Ölsammelraum für über die erste Dichtung ausgetretenes Leckage-Öl. Die radiale Innenfläche des feststehend am Innenring montierten, den Dichtungslaufring umgreifenden Ringaufsatzes bildet dabei eine feststehende, radial äußere Wandung des Ringraums. Bei einer im Wesentlichen horizontalen Anordnung der Lagerachse wird Leckage-Öl am gesamten Umfang durch den Ringaufsatz aufgefangen und in einem unteren Umfangsbereich gesammelt. Ein Austritt von gesammeltem Leckage-Öl wird über die zweite Dichtung sicher verhindert.

Die erfindungsgemäße Dichtungsanordnung fängt das austretende Öl, welches Fliehkräften und bei Stillstand der Schwerkraft ausgesetzt ist, vollständig auf und ermöglicht über den nicht-drehenden Ringaufsatz eine Rückführung ins Lager oder eine anderweitige Rückführung in den Ölkreislauf.

Vorzugsweise weist die erste Dichtungslauffläche zur Ausbildung eines Ölsumpfes einen kleineren Durchmesser auf als der größte Durchmesser einer Rollenkontaktfläche für die Wälzkörperreihe am Außenring. Dazu ist die erste Dichtungslauffläche bevorzugt an einem radial nach innen vorstehenden Abschnitt des Dichtungslaufrings ausgebildet. Durch die radiale Anordnung der ersten Dichtungslauffläche im Bereich der Rollenkontaktfläche staut sich Schmieröl im Lagerinnenraum bis auf die Rollenkontaktfläche auf, bevor die erste Dichtung mit einer Ölsäule belastet ist. Es entsteht in einem unteren Umfangsbereich des Lagerinnenraums somit ein Ölsumpf, der das Lager mit wichtigen Notlaufeigenschaften ausstattet. Durch den Ölsumpf ist auch bei Ausfall einer Umlaufschmierung eine ausreichende Schmierung des Lagers bei Drehung für einen Notlaufbetrieb gewährleistet. Hierdurch wird die Betriebs- und Ausfallsicherheit erhöht, was gerade aufwändig zu wartenden Windenergieanlagen von großem Vorteil ist.

Erfindungsgemäß ist in dem Ringaufsatz ein Abfluss für den Anschluss einer Ölrückführung vorgesehen mit einer Durchflussfläche, die zumindest teilweise in radialer Richtung weiter außen angeordnet ist als ein Dichtspalt der zweiten Dichtung. In dieser Ausführungsform kann das in dem Ringraum gesammelte Leckage-Öl kontinuierlich abgeführt, aufbereitet und über eine Umlaufschmierung wieder dem Lagerinnenraum zugeführt werden. Vorteilhaft ist dabei, dass die auftretende Leckage keinen Wartungsaufwand verursacht, da der Ölstand im Lagerinnenraum durch die Ölrückführung weitgehend konstant gehalten werden kann. Es kann sogar vorgesehen sein, dass die erste Dichtung derart eingestellt ist, dass ein Mindestleckagestrom aufrechterhalten wird, beispielsweise um den Dichtspalt der ersten Dichtung zu schmieren, oder um die Öl-Umlaufgeschwindigkeit der Umlaufschmierung zu erhöhen.

Alternativ oder zusätzlich kann an dem Aufsatzring in einem unteren Umfangsbereich ein Ölsammelbehälter ausgebildet sein, der das anfallende Leckage-Öl auffängt. Dieser Ölsammelbehälter kann bei regulären Wartungsarbeiten geleert und das Lager mit einer entsprechenden Menge Öl nachgeschmiert werden.

Vorzugsweise ist in dem Ringraum vor der zweiten Dichtung zum Abreißen mitgeschleppten Öls eine Abtropfkante an der radialen Außenfläche des Dichtungslaufrings ausgebildet. Die Abtropfkante verhindert ein Fließen oder Kriechen von Leckage-Öl entlang der radialen Außenfläche des Dichtungslaufrings in Richtung des Dichtspalts der zweiten Dichtung. Die Abtropfkante bewirkt unter dem Einfluss der Schwerkraft und/oder von Fliehkräften eine Tropfenbildung und ein anschließendes Abreißen der gebildeten Tropfen mitgeschleppten Öls. Die zweite Dichtung wird so entlastet und die Dichtigkeit der Dichtungsanordnung weiter erhöht. Die Abtropfkante ist vorzugsweise in radialer Richtung spitzwinklig zulaufend ausgebildet.

In einer bevorzugten Ausführungsform ist die erste Dichtung mittels des Ringaufsatzes axial gegen den Innenring verklemmt. Auf diese Weise lässt sich die erste Dichtung in einfacher Weise durch Lösen des Ringaufsatzes austauschen. Für eine genaue Positionierung in radialer Richtung ist die erste Dichtung vorzugsweise in einen radialen Absatz oder eine Nut des Innenrings eingelegt.

Bevorzugt ist die erste Dichtung eine radial wirkende Dichtung mit einer Dichtlippe, die gegen eine radiale Innenfläche des Dichtungslaufrings anliegt.

Insbesondere kann vorgesehen sein, dass die erste und die zweite Dichtung von dem Ringaufsatz in Position gehalten werden und an dem Dichtungslaufring eine zweite Dichtungslauffläche für die zweite Dichtung ausgebildet ist. Durch eine solche Dichtungsanordnung lassen sich beide Dichtungen des Dichtungssystems durch Lösen des Aufsatzrings von dem Innenring auf einfache Weise austauschen. Vorteilhaft ist ferner, dass die Dichtungssysteme nicht drehen und somit die Dichtlippen keinen umlaufenden zyklischen Verformungen ausgesetzt sind. Diese Anordnung ist auch insbesondere dann bevorzugt, wenn der Dichtungslaufring einstückig mit dem Außenring ausgebildet ist oder derart mit diesem verbunden ist, dass er sich nur bei einem Ausbau des Lagers von dem Außenring trennen lässt.

Bevorzugt liegt die erste Dichtung an der ersten Dichtungslauffläche mit einer ersten Lippenvorspannung an, die größer ist als eine zweite Lippenvorspannung der zweiten Dichtung. In diesem Fall bildet die erste Dichtung eine Hauptdichtung, die den Zweck erfüllt, eine möglichst geringe Leckage zuzulassen. Die zweite Dichtung hat die Wirkung einer Nebendichtung, die nur gegen Spritzöl abdichten muss und einen Schutz vor von außen eindringendem Staub bereitstellt. Die Lippenvorspannungen können über die Elastizität des jeweiligen Dichtungsmaterials aufgebracht werden. Zur Erhöhung der Lippenvorspannung können vorgespannte Federelemente in der ersten und/oder zweiten Dichtung angeordnet sein.

An dem Ringaufsatz und/oder dem Dichtungslaufring können zur Zentrierung axial wirkende Eingriffsmittel vorgesehen sein, die mit komplementären Eingriffsmitteln am Innen- und/oder entsprechend am Außenring in Eingriff stehen. Da die erste und die zweite Dichtung zwischen dem Ringaufsatz und dem Dichtungslaufring wirken und verschiedene Dichtspaltbreiten nur mit einer begrenzten Toleranz von wenigen Millimetern sicher abdichten können, ist eine genaue Positionierung von Ringaufsatz und Dichtungslaufring zueinander wünschenswert. Insbesondere bei radial wirkenden Dichtungen ist eine genaue Zentrierung von Ringaufsatz und Dichtungslaufring auf die Lagerachse wichtig um eine hinreichende Dichtwirkung zu erzielen. Hierfür ist es vorteilhaft an Ringaufsatz und Innenring bzw. an Dichtungslaufring und Außenring zueinander komplementäre Eingriffsmittel vorzusehen, die bei der Montage eine Zentrierung von Ringaufsatz und Dichtungslaufring bewirken. Die Eingriffsmittel können beispielsweise aus einer umlaufenden oder segmentierten Nut oder einem Absatz bestehen, in die entsprechend komplementäre axiale Vorsprünge des anderen Teils eingreifen.

Der Dichtungslaufring kann mittels einer Verschraubung am Außenring befestigt sein und gegenüber dem Außenring mit einem O-Ring abgedichtet sein, der radial innenseitig der Verschraubung angeordnet ist. Auf diese Weise wird eine sichere Abdichtung des Lagerinnenraums im Bereich der Fügefläche zwischen Dichtungslaufring und Außenring erreicht. Durch die radial Innenseitige Abdichtung ist die Verschraubung zugleich gegen in den Fügespalt kriechendes Öl abgesichert.

Zur weiteren Verbesserung der Abdichtung kann zur Entlastung der zweiten Dichtung zwischen der ersten und der zweiten Dichtung mindestens ein weiteres Dichtelement vorgesehen sein, das den Ringraum unterteilt. Das weitere Dichtelement kann im einfachsten Fall beispielsweise als Stopfbuchse ausgebildet sein, die beispielsweise aus Gummi oder einem Filzmaterial hergestellt sein kann. Alternativ oder zusätzlich kann auch eine weitere Lippendichtung vorgesehen sein.

Ferner kann bevorzugt zwischen dem weiteren Dichtelement und der zweiten Dichtung ein weiterer Abfluss in dem Ringaufsatz vorgesehen sein. Der Ringraum wird dabei durch das weitere Dichtungselement in zwei Kammern unterteilt, die jeweils mit einem Abfluss versehen sind. Es kann vorgesehen sein, dass ein oder beide Abflüsse mit einem Rückschlagventil verbunden sind, um einen Rückfluss von Öl in die jeweilige Kammer zu unterbinden.

In einer bevorzugten Ausführungsform sind die zweite Dichtung und das weitere Dichtelement als axial wirkende Lippendichtungen ausgebildet mit einer axial gleich oder entgegengesetzt gerichteten Lippenvorspannung. Durch Beaufschlagung der zwischen dem weiteren Dichtelement und der zweiten Dichtung gebildeten Kammer mit einem Über- oder Unterdruck kann Einfluss genommen werden auf das Dichtverhalten der Kammer. So kann bei axial entgegengesetzt zueinander wirkenden Lippendichtungen die Dichtwirkung beider Dichtungen durch Beaufschlagung der Kammer mit Überdruck erhöht werden. Bei axial gleichgerichteten Lippendichtungen kann durch Überdruck in der zwischen ihnen gebildeten Kammer beispielsweise genutzt werden, um das weitere Dichtelement zu entlasten und den Leckage-ölstrom im Dichtspalt des weiteren Dichtelements zurückzudrängen.

In einer bevorzugten Ausführungsform kann der Außenring Befestigungsbohrungen zur Befestigung des Rotorlagers an dem Rotor einer Windenergieanlage mittels Befestigungsschrauben aufweisen und der Dichtungslaufring sich in radialer Richtung bis in den Bereich der Befestigungsbohrungen erstrecken zur Klemmung des Dichtungslaufrings bei Montage des Rotors. Vorteilhaft ist, dass zur Befestigung des Dichtungslaufrings am Außenring keine zusätzlichen Bohrungen erforderlich sind, die den Außenring schwächen, da die auf den Dichtungslaufring im Betrieb wirkenden Kräfte über die Klemmverbindung abgeleitet werden. Zur Vereinfachung der Montage sind allenfalls ein paar wenige Bohrungen im Außenring vorteilhaft, um den Dichtungslaufring bereits werksseitig gegenüber dem Außenring positionieren und in Position fixieren zu können.

Der Dichtungslaufring ist vorzugsweise aus Stahl ausgebildet und zumindest im Bereich der ersten Dichtungslauffläche gehärtet. Dadurch wird der Verschleiß am Dichtungslaufring reduziert. Der Dichtungslaufring kann insbesondere einstückig mit dem Außenring ausgebildet sein. Zur Reduzierung des Materialaufwandes bei der Herstellung ist eine zweiteilige Ausführung jedoch bevorzugt. Denkbar ist auch eine kostengünstige Ausführung des Dichtungslaufrings aus einem Kunststoffmaterial.

In einer bevorzugten Ausführungsform ist der Ringaufsatz aus einem Kunststoffmaterial hergestellt. Da der Ringaufsatz nur vergleichsweise geringen Kräften ausgesetzt ist, genügt ein Kunststoffmaterial den Anforderungen. Beispielsweise kann der Ringaufsatz als Spritzgussbauteil ausgebildet sein. Eine Herstellung des Ringaufsatzes aus Stahl ist ebenfalls möglich. Bei einteiliger Ausbildung erfordert dies aber aufgrund der komplexen Struktur des Ringaufsatzes einen hohen Material- und/oder Bearbeitungsaufwand. Ringaufsätze aus Stahl können daher vorzugsweise zumindest zweiteilig ausgebildet werden, mit einem sich im Wesentlichen axial und einem radial sich erstreckenden Teil, die aneinandergefügt sind. Eine zumindest zweiteilige Ausführung des Ringaufsatzes ist aber auch für andere Materialien möglich.

Ringaufsatz und/oder Dichtungslaufring können auch mehrteilig und/oder segmentiert ausgebildet sein.

Bevorzugt sind als Wälzkörperreihen zwei Reihen von Kegelrollen vorgesehen, die in einer X- oder einer O-Anordnung zwischen dem Innenring und dem Außenring angeordnet sind. Durch beidseitige Anordnung der erfindungsgemäßen Dichtungsanordnung kann für beide Kegelrollenreihen ein Ölsumpf bereitgestellt werden. Denkbar sind aber auch andere Lagerbauformen, beispielsweise als 3-Rollen-Drehverbindung.

Die Aufgabe wird ferner gelöst durch eine Windenergieanlage mit einem Turm, einer an dem Turm befestigten Gondel und einem an der Gondel drehbar gelagerten Rotor, wobei der Rotor über das zuvor beschriebene Rotorlager an der Gondel gelagert ist. Der Rotor ist dabei mit dem Außenring und die Gondel mit dem Innenring des Rotorlagers drehfest verbunden.

Weitere vorteilhafte Ausführungsformen sind der nachfolgenden Beschreibung und den Unteransprüchen zu entnehmen.

Die Erfindung wird nachstehend anhand der in den beigefügten Abbildungen dargestellten Ausführungsbeispiele näher erläutert.

### Kurzbeschreibung der Zeichnungen

- Fig. 1: zeigt schematisch eine erfindungsgemäße Windenergieanlage mit einem über ein erfindungsgemäßes Rotorlager gelagerten Rotor,
- Fig. 2a: zeigt schematisch ein erstes Ausführungsbeispiel des erfindungsgemäßen Rotorlagers in einer geschnittenen Darstellung,
- Fig. 2b: zeigt schematisch eine Detaildarstellung des Ausschnitts X aus Fig. 2a,
- Fig. 3: zeigt schematisch eine Detaildarstellung eines zweiten Ausführungsbeispiels des erfindungsgemäßen Rotorlagers mit Ölfördermitteln zur Entlastung der zweiten Dichtung,
- Fig. 4: zeigt schematisch eine Detaildarstellung eines dritten Ausführungsbeispiels des erfindungsgemäßen Rotorlagers mit einem weiteren Dichtelement, wobei die zweite Dichtung und das weitere Dichtelement als gleichgerichtete, axial wirkende Lippendichtungen ausgebildet sind,
- Fig. 5: zeigt schematisch eine Detaildarstellung eines vierten Ausführungsbeispiels des erfindungsgemäßen Rotorlagers mit einem weiteren Dichtelement, wobei die zweite Dichtung und das weitere Dichtelement als entgegengesetzt gerichtete, axial wirkende Lippendichtungen ausgebildet sind, und
- Fig. 6: zeigt schematisch eine Detaildarstellung eines fünften Ausführungsbeispiels des erfindungsgemäßen Rotorlagers, bei dem der Dichtungslaufring mittels der Verschraubung des Rotors am Außenring befestigbar ist,
- Fig. 7: zeigt schematisch eine Detaildarstellung eines sechsten Ausführungsbeispiels des erfindungsgemäßen Rotorlagers mit einem zweiteilig ausgebildeten Ringaufsatz.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

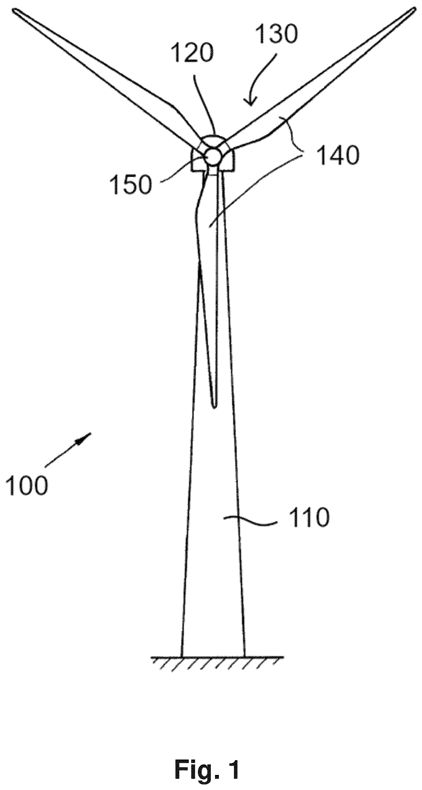

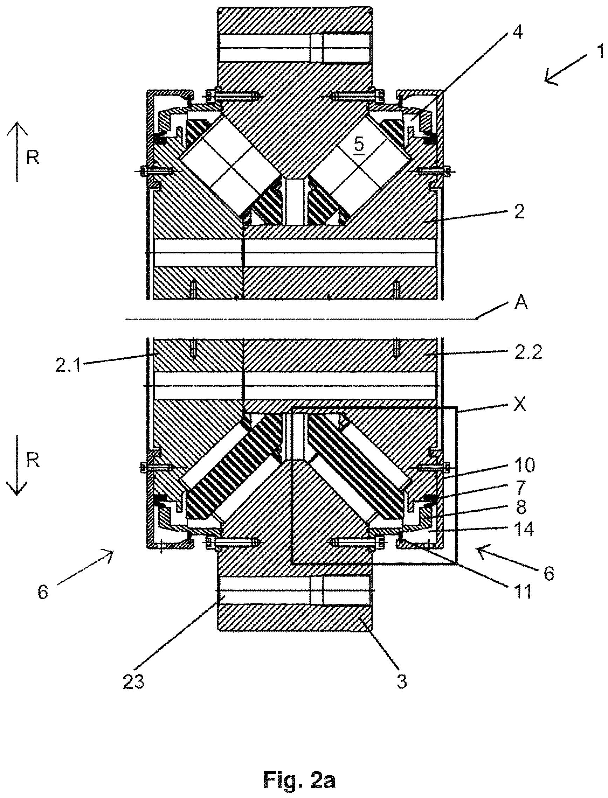

In **Fig. 1** ist eine Windenergieanlage 100 gemäß der Erfindung dargestellt. Die Windenergieanlage 100 umfasst einen Turm 110, eine an dem Turm 110 befestigte Gondel 120 und einen an der Gondel 120 drehbar gelagerten Rotor 130. Der Rotor 130 ist über ein erfindungsgemäßes Rotorlager 1 (vgl. Fig. 2a bis 6) an der Gondel 120 gelagert. Dabei ist der Rotor 130 mit dem Außenring 3 und die Gondel 120 mit dem Innenring 2 drehfest verbunden. Der Rotor 130 umfasst eine Rotornabe 120 und mehrere an der Rotornabe 120 befestigte Rotorblätter 140. Die an den Rotorblättern 140 angreifenden Windkräfte und die Schwerkraft werden somit über die Rotornabe 120 in den Außenring 3 des Rotorlagers 1 eingeleitet und über die Wälzkörperreihen 5 auf den Innenring 2 und die Gondel 120 übertragen.

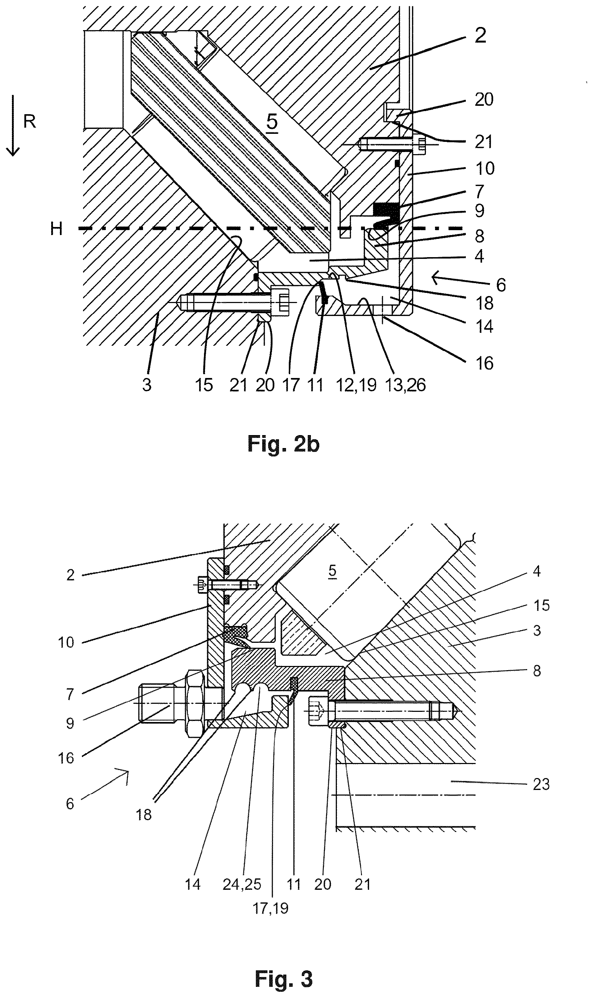

In **Fig. 2a** **und** **2b** ist ein erstes Ausführungsbeispiel des erfindungsgemäßen Rotorlagers 1 dargestellt. Das Rotorlager 1 weist einen Innenring 2 und einen gegenüber dem Innenring 2 verdrehbaren Außenring 3 auf, die einen Lagerinnenraum 4 begrenzen. In dem Lagerinnenraum 4 sind zwei Reihen 5 von zwischen den Lagerringen abrollbaren Wälzkörpern angeordnet. Das Rotorlager 1 weist auf jeder Seite eine Dichtungsanordnung 6 zur einseitigen Abdichtung des Lagerinnenraums 4 auf, wobei die Dichtungsanordnungen 6 jeweils eine drehfest an den Innenring 2 angeschlossene erste Dichtung 7 und einen drehfest an den Außenring 3 angeschlossenen Dichtungslaufring 8 aufweisen, an dem eine erste Dichtungslauffläche 9 für die erste Dichtung 7 ausgebildet ist. An dem Innenring 2 ist ein Ringaufsatz 10 befestigt, der den Dichtungslaufring 8 in radialer Richtung R umgreift. Ferner ist eine zwischen dem Dichtungslaufring 8 und dem Ringaufsatz 10 wirkende zweite Dichtung 11 vorgesehen, die einen zwischen einer radialen Außenfläche 12 des Dichtungslaufrings 8 und einer radialen Innenfläche 13 des Ringaufsatzes ausgebildeten Ringraum 14 begrenzt.

Bei dem dargestellten Ausführungsbeispiel sind als Wälzkörperreihen 5 zwei Reihen von Kegelrollen vorgesehen, die in einer O-Anordnung zwischen dem Innenring 2 und dem Außenring 3 angeordnet sind. Der Innenring 2 ist aus zwei zueinander abgedichteten Teilen 2.1 und 2.2 zusammengesetzt. Denkbare alternative Lagerbauformen sind beispielsweise ein Kegelrollenlager mit X-Anordnung der Rollen, symmetrische oder asymmetrische Kegelrollenlager, oder eine 3-Rollen-Drehverbindung.

Zur Ausbildung eines Ölsumpfes weist die erste Dichtungslauffläche 9 einen kleineren Durchmesser auf als der größte Durchmesser einer Rollenkontaktfläche 15 für die Wälzkörperreihe 5 am Außenring 3. Die erste Dichtungslauffläche 9 für die erste Dichtung 7 ist somit an dem Dichtungslaufring 8 in radialer Richtung R so angebracht ist, dass sie im Bereich der am Außenring 3 ausgebildeten Rollenkontaktfläche 15 für die Wälzkörperreihe 5 angeordnet ist. Im Lagerinnenraum 4 staut sich somit das eingebrachte Schmieröl bis auf die Rollenkontaktfläche 15, so dass die Wälzkörper bei jedem Umlauf in einem unteren Umfangsbereich des Lagers in den Ölsumpf eintauchen und mit Schmiermittel benetzt werden. Aufgrund des Dichtungslaufrings 8 mit einem radial nach innen vorstehenden Abschnitt, an dem die Dichtungslauffläche 9 angeordnet ist, bildet sich im Laufbahnsystem ein Ölsumpf aus, der auch bei Ausfall der Ölversorgung eine ausreichende Benetzung der Wälzkontakte und Gleitführungen im Lager sicherstellt. Die maximale Füllhöhe H des Ölsumpfes ist in Fig. 2b durch eine gestrichelte Linie markiert.

Wie in Fig. 2b dargestellt ist in dem Ringaufsatz 10 ein Abfluss 16 für den Anschluss einer Ölrückführung vorgesehen mit einer Durchflussfläche, die zumindest teilweise in radialer Richtung R weiter außen angeordnet ist als ein Dichtspalt 17 der zweiten Dichtung 11. In dem dargestellten Ausführungsbeispiel erfolgt der Abfluss in radialer Richtung R. Der Einbau des Rotorlagers erfolgt so, dass der Abfluss 16 im in vertikaler Richtung untersten Umfangsabschnitt angeordnet ist, um einen effektiven Ölabfluss sicherzustellen. Der Ringaufsatz 10 ist vorzugsweise im Bereich des Abflusses 16 wannenförmig mit einer zu der zweiten Dichtung 11 ansteigenden Flanke ausgebildet. Vorzugsweise liegt der Abfluss 16 auch bei der üblicherweise ca. 6° betragenden Achsneigung des Rotorlagers unterhalb der zweiten Dichtung 11, so dass diese nicht durch anstehendes Öl, sondern nur durch Spritzöl belastet wird. Der Abfluss 16 ist somit im Bereich einer in der radialen Innenfläche des Ringaufsatzes ausgebildeten Vertiefung 26 angeordnet, so dass das weitere Dichtungselement 22 oberhalb einer durch die Vertiefung 26 definierten Rückstauebene liegt.

Durch die Verbindung des Ringraums 14 zwischen der ersten 8 und der zweiten Dichtung 11 mit einer Rückführung des Öl-Schmiersystems des Rotorlagers 1 wird eine Drainage geschaffen. Die Rückführung des Leckage-Öls in das Öl-Schmiersystem kann aktiv durch Unterdruck oder auch passiv durch geodätischen Höhenunterschied erfolgen. Vorzugsweise ist an den Dichtungsanordnungen 6 beidseits des Lagers jeweils ein Abfluss 16 vorgesehen. Das Öl wird über eine Versorgungsanlage, die mit dem stehenden Innenring 2 über Rohrleitungen bzw. Schläuche verbunden ist, zugeführt und abgeführt. Dabei ist eine Überspeisung des Lagers auch bei Ausfall einer Überwachungseinrichtung sicher zu vermeiden. Eine Belüftung des Lagers ist ebenfalls sicherzustellen.

Aufgrund der Abführung des Leckage-Öls kann ein gewisser Leckage-Ölstrom toleriert werden oder sogar wünschenswert sein. Dadurch sind die erforderlichen Dichtungsvorspannungen und die daraus resultierenden Drehwiderstände reduziert. Ferner ist der Dichtungsverschleiß minimiert und die Lebensdauer der Dichtungen 7, 11 erhöht, was zu einem reduzierten Wartungsaufwand der Windenergieanlage 100 beiträgt.

In dem Ringraum 14 ist vor der zweiten Dichtung 11 zum Abreißen mitgeschleppten Öls eine Abtropfkante 18 an der radialen Außenfläche 12 des Dichtungslaufrings 8 ausgebildet. Die Abtropfkante 18 ist vorzugsweise vor dem weiteren Dichtungselement 22 angeordnet. Durch Vorsehen einer Abtropfkante 18 können einfachere und kostengünstigere Dichtungstypen für die zweite Dichtung 11 eingesetzt werden.

Beide Dichtungen 7, 11 können radial oder auch axial dichtend (in Bezug auf die Lagerachse A des Rotorlagers) ausgeführt werden. Grundsätzlich können beide Dichtungen 7, 11 gleich ausgebildet sein. Bevorzugt sind jedoch Ausführungsformen, bei denen die erste Dichtung 7 an der ersten Dichtungslauffläche 9 mit einer ersten Lippenvorspannung anliegt, die größer ist als eine zweite Lippenvorspannung der zweiten Dichtung 11. Dadurch bildet die erste Dichtung 7 eine Hauptdichtung und die zweite Dichtung 11 eine Nebendichtung. Bei dem dargestellten Ausführungsbeispiel ist bevorzugt vorgesehen, die erste Dichtung 7 als eine radial wirkende Hauptdichtung und die zweite Dichtung 11 als eine axial wirkende Nebendichtung 11 auszuführen.

Vorzugsweise wird die erste Dichtung 7 als nicht endlose, gefügte Lippendichtung ausgebildet. Als Dichtungsmaterial für die erste Dichtung 7 kommt vorzugsweise Acrylnitril-Butadien-Kautschuk (NBR) oder Hydrierter Acrylnitrilbutadien-Kautschuk (HNBR) zum Einsatz.

Die zweite Dichtung 11 ist vorzugsweise als eine Staubschutzdichtung beispielsweise aus Perbunan hergestellt. Alternativ kann die zweite Dichtung 11 beispielsweise auch aus NBR oder HNBR hergestellt werden.

Um die Dichtwirkung zu erhöhen, können auch federunterstützte Dichtsysteme wie beispielsweise Fingerfederdichtungen, insbesondere für die erste Dichtung 8, oder auch Filz- und/oder Labyrinthdichtungen eingesetzt werden.

Die erste Dichtung 7 kann, wie in Fig. 2b gezeigt, mittels des Ringaufsatzes 10 axial gegen den Innenring 2 verklemmt sein. Dazu ist der Ringaufsatz 10 vorzugsweise über eine Schraubverbindung an dem Innenring 2 befestigt und gegenüber diesem abgedichtet. Beim Anziehen der Schrauben wird die Dichtung 7 in einem radialen Absatz des Innenrings 2 verklemmt und dadurch zugleich radial positioniert.

In dem dargestellten Ausführungsbeispiel werden die erste 7 und die zweite Dichtung 11 von dem Ringaufsatz 10 in Position gehalten und an dem Dichtungslaufring 8 ist sowohl die erste Dichtungslauffläche 9 für die erste Dichtung 7 als auch eine zweite Dichtungslauffläche 19 für die zweite Dichtung 11 ausgebildet ist. Vorteilhaft an dieser Lösung ist, dass zum Tausch der Dichtungen lediglich der Ringaufsatz 10 ausgebaut werden muss.

Der Dichtungslaufring 8 ist vorzugsweise mittels einer Schraubverbindung an dem Außenring 3 fixiert. Dabei können auch Durchsteckschrauben genutzt werden zur gleichzeitigen Befestigung je eines Dichtungslaufrings 8 beidseits des Lagers 1. Der Dichtungslaufring kann aber auch einstückig mit dem Außenring gefertigt sein.

Zur Zentrierung sind an dem Ringaufsatz 10 und dem Dichtungslaufring 8 axial wirkende Eingriffsmittel 20 vorgesehen, die mit komplementären Eingriffsmitteln 21 am Innenring 2 und entsprechend am Außenring 3 in Eingriff stehen. Bei dem in Fig. 2a und 2b gezeigten Ausführungsbeispiel weist der Ringaufsatz 10 einen axialen Vorsprung 20 auf, der in eine stirnseitige Nut 21 am Innenring 2 axial eingreift und so eine radiale Verschiebung des Ringaufsatzes 10 verhindert. In gleicher Weise weist der Dichtungslaufring 8 eine Anschlagkante 20 auf, die in einen stirnseitigen Absatz 21 am Außenring 3 eingreift.

Der Dichtungslaufring 8 ist - wie in Fig. 2b dargestellt - vorzugsweise mittels einer Verschraubung am Außenring 3 befestigt und gegenüber dem Außenring 3 mit einem O-Ring abgedichtet, der radial innenseitig der Verschraubung angeordnet ist.

Der Dichtungslaufring 8 ist vorzugsweise aus Stahl ausgebildet, der zumindest im Bereich der ersten Dichtungslauffläche 9 gehärtet ist, um den Verschleiß der Dichtungen zu reduzieren. Der Dichtungslaufring kann aber beispielsweise auch aus einem anderen Metall oder einem Kunststoffmaterial ausgebildet sein.

Der Ringaufsatz 10 ist vorzugsweise aus einem Kunststoffmaterial hergestellt. Eine Ausbildung aus Stahl ist aber ebenfalls denkbar und möglich.

Bei Ausbildung aus Stahl können der Ringaufsatz 10 und der Dichtungslaufring 8 als geschmiedete Ringe, als Guss- oder als gebaute Ringe, geteilt oder einstückig ausgeführt werden.

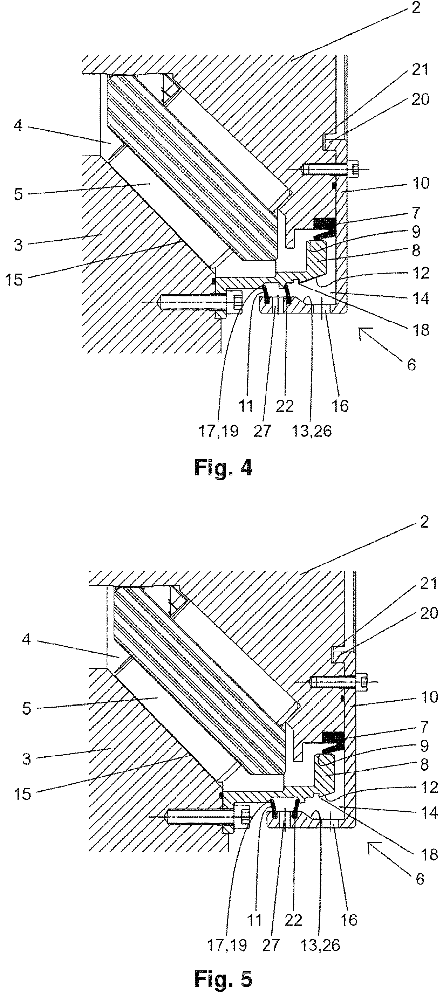

Bei dem in Fig. 2a dargestellten Ausführungsbeispiel sind die Dichtungsanordnung 6 auf beiden Seiten des Lagers gleich ausgebildet. In einer alternativen Ausführungsform können die Dichtungsanordnungen 6 auf den beiden Seiten des Lagers aber auch unterschiedlich ausgeprägt sein. Beispielsweise kann nur auf einer Seite ein weiteres Dichtelement (vgl. Fig. 4 und 5) vorgesehen sein, oder statt einer Ölrückführung ein Ölsammelbehälter vorgesehen sein.

**Fig. 3** zeigt ein zweites Ausführungsbeispiel des erfindungsgemäßen Rotorlagers 1. Im Unterschied zum ersten Ausführungsbeispiel ist die zweite Dichtung 11 radialwirkend angeordnet. Unabhängig von ihrer Wirkrichtung kann die zweite Dichtung 11 wie in Fig. 3 gezeigt von dem Dichtungslaufring 8 gehalten werden. Die zweite Dichtungslauffläche 19 ist dann an dem Ringaufsatz 10 ausgebildet.

Weiterhin zeigt Fig. 3 im Unterschied zum ersten Ausführungsbeispiel einen axialen Abfluss 16 im Ringaufsatz 10 zum Anschluss an eine Ölrückführung.

Ferner sind an der radialen Außenfläche 12 des Dichtungslaufrings 8 Ölfördermittel 24 vorgesehen, die geeignet sind, bei einer Drehung des Außenrings 3 in einer Vorzugsdrehrichtung mitgeschlepptes Öl von der zweiten Dichtung 11 weg zu fördern. Die radiale Außenfläche 12 ist dann so ausgeführt, dass mitgeschlepptes Öl von der zweiten Dichtung 11 weggeführt wird. Wie in Fig. 3 dargestellt können die Ölfördermittel 24 beispielsweise als eine schraubenlinienförmige Nut 25 in der radialen Außenfläche 12 des Dichtungslaufrings 8 ausgebildet sein. Denkbar sind aber beispielsweise auch schrägstehende Lamellen als Ölfördermittel 24.

Im Übrigen gelten die Ausführungen zum ersten Ausführungsbeispiel für das zweite Ausführungsbeispiel entsprechend.

In **Fig. 4** ist ein drittes Ausführungsbeispiel des erfindungsgemäßen Rotorlagers gezeigt. Das dritte Ausführungsbeispiel unterscheidet sich von dem ersten Ausführungsbeispiel im Wesentlichen dadurch, dass zur Entlastung der zweiten Dichtung 11 zwischen der ersten 7 und der zweiten Dichtung 11 mindestens ein weiteres Dichtelement 22 vorgesehen ist, dass den Ringraum 14 in zwei Kammern unterteilt.

Die zweite Dichtung 11 und das weitere Dichtelement 22 sind als axial wirkende Lippendichtungen ausgebildet mit einer axial gleich gerichteten Lippenvorspannung. Ferner ist die Kammer zwischen dem weiteren Dichtelement 22 und der zweiten Dichtung 11 mit einem weiteren Abfluss 27 in dem Ringaufsatz 10 ausgestattet. Es wird auf diese Weise ein dreistufiges Dichtungssystem mit einer zweiten Ölauffangkammer geschaffen, die über den weiteren Abfluss 27 mit einem Auffangbehälter oder der Ölrückführung verbunden werden kann. Auf diese Weise kann der noch verbleibende Leckvolumenstrom weiter verringert werden. Vorteilhafterweise ist die Rückführung mit einem Rückschlagventil verbunden, so dass kein Öl aus der Rückführung in die zweite Kammer zurückfließen kann.

Eine weitere Optimierungsmöglichkeit besteht darin, dass die erste und/oder die zweite Ölauffangkammer mit einem Über- oder Unterdruck versehen wird. Bei den gleich gerichteten Lippendichtungen gemäß Fig. 4 wird das weitere Dichtelement 22 durch einen Überdruck in der zweiten Kammer entlastet und die Strömungsrichtung des Leckvolumenstroms in Richtung der ersten Kammer gelenkt. Durch eine günstige Kombination aus Über- / Unterdruck in den beiden Ölauffangkammern und der Anordnung der Lippendichtung kann die Dichtwirkung und das Reibmoment optimiert werden.

**Fig. 5** zeigt ein viertes Ausführungsbeispiel der Erfindung, dass sich von dem in Fig. 4 dargestellten Ausführungsbeispiel im Wesentlichen dadurch unterscheidet, dass die zweite Dichtung 11 und das weitere Dichtelement 22 als entgegengesetzt gerichtete, axial wirkende Lippendichtungen ausgebildet sind. Bei dieser Dichtungsanordnung bewirkt ein Überdruck in der zwischen den Dichtungen ausgebildeten zweiten Ölauffangkammer eine Erhöhung der Dichtwirkung beider Dichtungen. Die Dichtlippen sind derart angeordnet, dass der zugehörige Dichtspalt durch den Überdruck geschlossen wird.

Im Übrigen gelten die Ausführungen zum ersten Ausführungsbeispiel für das dritte und vierte Ausführungsbeispiel entsprechend.

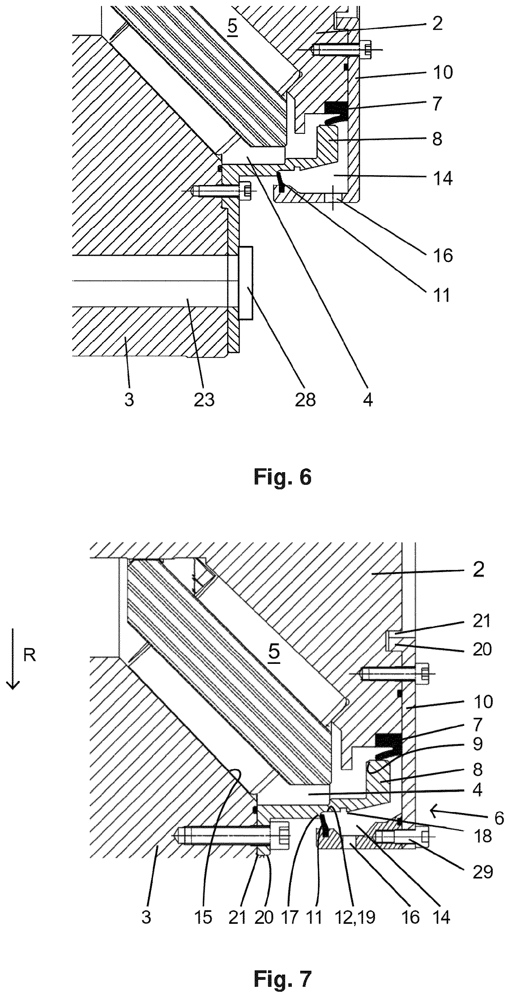

Das in **Fig. 6** dargestellte fünfte Ausführungsbeispiel unterscheidet sich vom ersten Ausführungsbeispiel in Fig. 2b dadurch, dass sich der Dichtungslaufring 8 in radialer Richtung bis in den Bereich der Befestigungsbohrungen 23 im Außenring 3 erstreckt. Die Befestigungsbohrungen 23 dienen in erster Linie zur Befestigung des Rotorlagers an dem Rotor einer Windenergieanlage mittels Befestigungsschrauben 28. In dem dargestellten Ausführungsbeispiel kann der Dichtungslaufring 8 bei Montage des Rotors mit der Anschlusskonstruktion durch diese Standardverschraubung geklemmt werden. Dies hat den Vorteil, dass für die Montage weniger und kleinere Schrauben und Bohrungen in den drehenden Ring eingebracht werden müssen und die Maßhaltigkeit des Dichtungslaufrings 8 im geklemmten Zustand dennoch gewährleistet ist.

Im Übrigen gelten die Ausführungen zum ersten Ausführungsbeispiel entsprechend.

Fig. 7 zeigt ein sechstes Ausführungsbeispiel des erfindungsgemäßen Rotorlagers, dass sich von dem ersten Ausführungsbeispiel dadurch unterscheidet, dass der Ringaufsatz 10 zweiteilig ausgebildet ist. Der Ringaufsatz umfasst einen im Wesentlichen radial sich erstreckenden ersten und einen im Wesentlichen axial sich erstreckenden zweiten Ring, die in einem Eckbereich aneinandergefügt und zueinander abgedichtet sind. Zur Fügung der Ringe kann beispielsweise eine Verschraubung 29 dienen. Denkbar sind aber auch andere Fügeverfahren wie beispielsweise Schweißen oder Kleben.

Die zumindest zweiteilige Ausführung des Ringaufsatzes 10 hat den Vorteil, dass die komplexe Form des Ringaufsatzes 10 kostengünstiger gefertigt werden kann, die Montage vereinfacht ist und der Sitz der Dichtungen 7, 11 besser kontrolliert werden kann. In einer alternativen Ausführungsform kann der geteilte Ringaufsatz 10 auch segmentiert ausgeführt werden.

Im Übrigen gelten die Ausführungen zum ersten Ausführungsbeispiel entsprechend.

### Bezugszeichenliste

- 1: Rotorlager
- 2, 2.1, 2.2: Innenring
- 3: Außenring
- 4: Lagerinnenraum
- 5: Wälzkörperreihe
- 6: Dichtungsanordnung
- 7: erste Dichtung
- 8: Dichtungslaufring
- 9: erste Dichtungslauffläche
- 10: Ringaufsatz
- 11: zweite Dichtung
- 12: radiale Außenfläche
- 13: radiale Innenfläche
- 14: Ringraum
- 15: Rollenkontaktfläche
- 16: Abfluss
- 17: Dichtspalt
- 18: Abtropfkante
- 19: zweite Dichtungslauffläche
- 20: Eingriffsmittel
- 21: komplementäre Eingriffsmittel
- 22: Dichtelement
- 23: Befestigungsbohrungen
- 24: Ölfördermittel
- 25: Nut
- 26: Vertiefung
- 27: Abfluss
- 28: Befestigungsschraube
- 29: Verschraubung
- 100: Windenergieanlage
- 110: Turm
- 120: Gondel
- 130: Rotor
- 140: Rotorblatt
- 150: Rotornabe

- R: radiale Richtung
- H: Füllhöhe
- A: Lagerachse

## Patentansprüche

1. Rotorlager für eine Windenergieanlage (100) mit einem Innenring (2) und einem gegenüber dem Innenring (2) verdrehbaren Außenring (3), die einen Lagerinnenraum (4) begrenzen, in dem mindestens eine Reihe (5) von zwischen den Lagerringen (2, 3) abrollbaren Wälzkörpern angeordnet ist, und mit Dichtungsanordnungen (6) zur jeweils einseitigen Abdichtung des Lagerinnenraums (4), wobei mindestens eine der Dichtungsanordnungen (6) eine drehfest an den Innenring (2) angeschlossene erste Dichtung (7) und einen drehfest an den Außenring (3) angeschlossenen Dichtungslaufring (8) aufweist, an dem eine erste Dichtungslauffläche (9) für die erste Dichtung (7) ausgebildet ist, wobei an dem Innenring (2) ein Ringaufsatz (10) befestigt ist und eine zwischen dem Dichtungslaufring (8) und dem Ringaufsatz (10) wirkende zweite Dichtung (11) vorgesehen ist, **dadurch gekennzeichnet, dass,** der Ringaufsatz (10) den Dichtungslaufring (8) in radialer Richtung (R) umgreift und die zweite Dichtung (11) einen zwischen einer radialen Außenfläche (12) des Dichtungslaufrings (8) und einer radialen Innenfläche (13) des Ringaufsatzes ausgebildeten Ringraum (14) begrenzt, wobei in dem Ringaufsatz (10) ein Abfluss (16) für den Anschluss einer Ölrückführung vorgesehen ist mit einer Durchflussfläche, die zumindest teilweise in radialer Richtung (R) weiter außen angeordnet ist als ein Dichtspalt (17) der zweiten Dichtung (11).

2. Rotorlager nach Anspruch 1, **dadurch gekennzeichnet, dass** zur Ausbildung eines Ölsumpfes die erste Dichtungslauffläche (9) einen kleineren Durchmesser aufweist als der größte Durchmesser einer Rollenkontaktfläche (15) für die Wälzkörperreihe (5) am Außenring (3).

3. Rotorlager nach Anspruch 1 oder 2, **dadurch gekennzeichnet, dass** in dem Ringraum (14) vor der zweiten Dichtung (11) zum Abreißen mitgeschleppten Öls eine Abtropfkante (18) an der radialen Außenfläche (12) des Dichtungslaufrings (8) ausgebildet ist.

4. Rotorlager nach einem der Ansprüche 1 bis 3 **dadurch gekennzeichnet, dass** die erste Dichtung (7) mittels des Ringaufsatzes (10) axial gegen den Innenring (2) verklemmt ist.

5. Rotorlager nach einem der Ansprüche 1 bis 4, **dadurch gekennzeichnet, dass** die erste (7) und die zweite Dichtung (11) von dem Ringaufsatz (10) in Position gehalten werden und an dem Dichtungslaufring (8) eine zweite Dichtungslauffläche (19) für die zweite Dichtung (11) ausgebildet ist.

6. Rotorlager nach einem der Ansprüche 1 bis 5, **dadurch gekennzeichnet, dass** die erste Dichtung (7) an der ersten Dichtungslauffläche (9) mit einer ersten Lippenvorspannung anliegt, die größer ist als eine zweite Lippenvorspannung der zweiten Dichtung (11).

7. Rotorlager nach einem der Ansprüche 1 bis 6, **dadurch gekennzeichnet, dass** an dem Ringaufsatz (10) und/oder dem Dichtungslaufring (8) zur Zentrierung axial wirkende Eingriffsmittel (20) vorgesehen sind, die mit komplementären Eingriffsmitteln (21) am Innenring (2) und/oder entsprechend am Außenring (3) in Eingriff stehen.

8. Rotorlager nach einem der Ansprüche 1 bis 7, **dadurch gekennzeichnet, dass** der Dichtungslaufring (8) mittels einer Verschraubung am Außenring (3) befestigt ist und gegenüber dem Außenring (3) mit einem O-Ring abgedichtet ist, der radial innenseitig der Verschraubung angeordnet ist.

9. Rotorlager nach einem der Ansprüche 1 bis 8, **dadurch gekennzeichnet, dass** zur Entlastung der zweiten Dichtung (11) zwischen der ersten (7) und der zweiten Dichtung (11) mindestens ein weiteres Dichtelement (22) vorgesehen ist, das den Ringraum (14) unterteilt.

10. Rotorlager nach Anspruch 9, **dadurch gekennzeichnet, dass** die zweite Dichtung (11) und das weitere Dichtelement (22) als axial wirkende Lippendichtungen ausgebildet sind mit einer axial gleich oder entgegengesetzt gerichteten Lippenvorspannung.

11. Rotorlager nach Anspruch 3 und Anspruch 9 oder 10, **dadurch gekennzeichnet, dass** zwischen dem weiteren Dichtelement (22) und der zweiten Dichtung (11) ein weiterer Abfluss (27) in dem Ringaufsatz (10) vorgesehen ist.

12. Rotorlager nach einem der Ansprüche 1 bis 11, **dadurch gekennzeichnet, dass** der Außenring (3) Befestigungsbohrungen (23) zur Befestigung des Rotorlagers (1) an einem Rotor (130) einer Windenergieanlage (100) mittels Befestigungsschrauben (28) aufweist und sich der Dichtungslaufring (8) in radialer Richtung (R) bis in den Bereich der Befestigungsbohrungen (23) erstreckt zur Klemmung des Dichtungslaufrings (8) bei Montage des Rotors (130).

13. Rotorlager nach einem der Ansprüche 1 bis 12, **dadurch gekennzeichnet, dass** der Dichtungslaufring (8) aus Stahl ausgebildet und zumindest im Bereich der ersten Dichtungslauffläche (9) gehärtet ist.

14. Rotorlager nach einem der Ansprüche 1 bis 13, **dadurch gekennzeichnet, dass** der Ringaufsatz (10) aus einem Kunststoffmaterial hergestellt ist.

15. Rotorlager nach einem der Ansprüche 1 bis 14, **dadurch gekennzeichnet, dass** als Wälzkörperreihen (5) zwei Reihen von Kegelrollen vorgesehen sind, die in einer X- oder einer O-Anordnung zwischen dem Innenring (2) und dem Außenring (3) angeordnet sind.

16. Windenergieanlage mit einem Turm (110), einer an dem Turm (110) befestigten Gondel (120) und einem an der Gondel (120) drehbar gelagerten Rotor (130), **dadurch gekennzeichnet, dass** der Rotor (130) über ein Rotorlager (1) nach einem der Ansprüche 1 bis 15 an der Gondel (120) gelagert ist, wobei der Rotor (130) mit dem Außenring (3) und die Gondel (120) mit dem Innenring (2) drehfest verbunden sind.

## Claims

1. Rotor bearing for a wind turbine (100) having an inner ring (2) and an outer ring (3) rotatable relative to the inner ring (2) which delimit a bearing interior (4) in which at least one row (5) of rolling elements which can roll between the bearing rings (2, 3) is arranged, and having sealing arrangements (6) for sealing the bearing interior (4) on one side in each case, wherein at least one of the sealing arrangements (6) has a first seal (7) connected in a rotationally fixed manner to the inner ring (2) and a seal race ring (8) connected in a rotationally fixed manner to the outer ring (3), on which a first seal running surface (9) for the first seal (7) is formed, wherein an annular attachment (10) is fastened to the inner ring (2) and a second seal (11) acting between the seal race ring (8) and the annular attachment (10) is provided, **characterized in that** the annular attachment (10) embraces the seal race ring (8) in the radial direction (R) and the second seal (11) delimits an annular space (14) formed between a radial outer surface (12) of the seal race ring (8) and a radial inner surface (13) of the annular attachment, wherein an outlet (16) for connecting an oil return is provided in the annular attachment (10) with a flow sectional area which is arranged at least partially further outwards in the radial direction (R) than a sealing gap (17) of the second seal (11).

2. Rotor bearing according to claim 1, **characterized in that,** in order to form an oil sump, the first seal running surface (9) has a smaller diameter than the largest diameter of a roller contact surface (15) for the row (5) of rolling elements on the outer ring (3).

3. Rotor bearing according to claim 1 or 2, **characterized in that** a drip-off edge (18) is formed on the radial outer surface (12) of the seal race ring (8) in the annular space (14) upstream of the second seal (11) for tearing off entrained oil.

4. Rotor bearing according to one of claims 1 to 3, **characterized in that** the first seal (7) is axially clamped against the inner ring (2) by means of the ring attachment (10).

5. Rotor bearing according to one of claims 1 to 4, **characterized in that** the first (7) and the second seal (11) are held in position by the ring attachment (10) and a second seal running surface (19) for the second seal (11) is formed on the seal race ring (8).

6. Rotor bearing according to one of claims 1 to 5, **characterized in that** the first seal (7) bears against the first seal running surface (9) with a first lip preload which is greater than a second lip preload of the second seal (11).

7. Rotor bearing according to one of claims 1 to 6, **characterized in that** axially acting engagement means (20) are provided on the ring attachment (10) and/or the seal race ring (8) for centering, which engagement means are in engagement with complementary engagement means (21) on the inner ring (2) and/or correspondingly on the outer ring (3).

8. Rotor bearing according to one of claims 1 to 7, **characterized in that** the seal race ring (8) is fastened to the outer ring (3) by means of a screw connection and is sealed with respect to the outer ring (3) by an O-ring which is arranged radially on the inside of the screw connection.

9. Rotor bearing according to one of claims 1 to 8, **characterized in that** at least one further sealing element (22) is provided between the first seal (7) and the second seal (11) to relieve the second seal (11) and subdivides the annular space (14).

10. Rotor bearing according to claim 9, **characterized in that** the second seal (11) and the further sealing element (22) are designed as axially acting lip seals with an axially equal or oppositely directed lip preload.

11. Rotor bearing according to claim 3 and claim 9 or 10, **characterized in that** a further outlet (27) is provided in the ring attachment (10) between the further sealing element (22) and the second seal (11).

12. Rotor bearing according to one of claims 1 to 11, **characterized in that** the outer ring (3) has fastening bores (23) for fastening the rotor bearing (1) to a rotor (130) of a wind turbine (100) by means of fastening screws (28) and the seal race ring (8) extends in the radial direction (R) into the region of the fastening bores (23) for clamping the seal race ring (8) when the rotor (130) is mounted.

13. Rotor bearing according to one of claims 1 to 12, **characterized in that** the seal race ring (8) is made of steel and is hardened at least in the region of the first seal running surface (9).

14. Rotor bearing according to one of claims 1 to 13, **characterized in that** the ring attachment (10) is made of a plastic material.

15. Rotor bearing according to one of claims 1 to 14, **characterized in that** two rows of tapered rollers are provided as rolling element rows (5), which are arranged in an X or an O arrangement between the inner ring (2) and the outer ring (3).

16. Wind energy installation having a tower (110), a nacelle (120) fastened to the tower (110) and a rotor (130) rotatably mounted on the nacelle (120), **characterized in that** the rotor (130) is mounted on the nacelle (120) via a rotor bearing (1) according to one of claims 1 to 15, the rotor (130) being connected to the outer ring (3) and the nacelle (120) being connected to the inner ring (2) in a rotationally fixed manner.

## Revendications

1. Palier de rotor pour une éolienne (100) avec une bague intérieure (2) et une bague extérieure (3) pouvant tourner par rapport à la bague intérieure (2), qui délimitent un espace intérieur de palier (4) dans lequel est disposée au moins une rangée (5) de corps roulants pouvant rouler entre les bagues de palier (2, 3), et avec des agencements d'étanchéité (6) pour l'étanchéité respective d'un côté de l'espace intérieur de palier (4), au moins l'un des agencements d'étanchéité (6) présentant un premier joint (7) raccordé de manière solidaire en rotation à la bague intérieure (2) et une (8) raccordée de manière solidaire en rotation à la bague extérieure (3), sur laquelle est formée une première surface de roulement de joint (9) pour le premier joint (7), une garniture annulaire (10) étant fixée sur la bague intérieure (2) et un deuxième joint (11) agissant entre la bague d'étanchéité (8) et la garniture annulaire (10) étant prévu, **caractérisé en ce que** la garniture annulaire (10) entoure la bague d'étanchéité (8) dans la direction radiale (R) et le deuxième joint (11) délimite un espace annulaire (14) formé entre une surface extérieure radiale (12) de la bague d'étanchéité (8) et une surface intérieure radiale (13) de la garniture annulaire, un écoulement (16) étant prévu dans la garniture annulaire (10) pour le raccordement d'un retour d'huile avec une surface de passage qui est disposée au moins partiellement dans la direction radiale (R) plus à l'extérieur qu'une fente d'étanchéité (17) du deuxième joint (11).

2. Palier de rotor selon la revendication 1, **caractérisé en ce que,** pour former un carter d'huile, la première surface de roulement de joint (9) présente un diamètre plus petit que le plus grand diamètre d'une surface de contact de rouleau (15) pour la rangée d'éléments roulants (5) sur la bague extérieure (3).

3. Palier de rotor selon la revendication 1 ou 2, **caractérisé en ce qu'**une arête d'égouttage (18) est formée dans l'espace annulaire (14) devant le deuxième joint (11) pour arracher l'huile entra née sur la surface extérieure radiale (12) de la bague d'étanchéité (8).

4. Palier de rotor selon l'une des revendications 1 à 3, **caractérisé en ce que** le premier joint (7) est bloqué axialement contre la bague intérieure (2) au moyen de la garniture annulaire (10).

5. Palier de rotor selon l'une des revendications 1 à 4, **caractérisé en ce que** le premier (7) et le deuxième joint (11) sont maintenus en position par la garniture annulaire (10) et **en ce qu'**une deuxième surface de roulement de joint (19) pour le deuxième joint (11) est formée sur la bague d'étanchéité (8).

6. Palier de rotor selon l'une quelconque des revendications 1 à 5, **caractérisé en ce que** le premier joint (7) est en contact avec la première surface de roulement de joint (9) avec une première précontrainte de lèvre qui est supérieure à une deuxième précontrainte de lèvre du deuxième joint (11).

7. Palier de rotor selon l'une des revendications 1 à 6, **caractérisé en ce que** des moyens d'engagement (20) agissant axialement sont prévus sur la garniture annulaire (10) et/ou la bague d'étanchéité (8) pour le centrage, qui sont en prise avec des moyens d'engagement complémentaires (21) sur la bague intérieure (2) et/ou de manière correspondante sur la bague extérieure (3).

8. Palier de rotor selon l'une des revendications 1 à 7, **caractérisé en ce que** la bague d'étanchéité (8) est fixée à la bague extérieure (3) au moyen d'un vissage et est rendue étanche par rapport à la bague extérieure (3) au moyen d'un joint torique qui est disposé radialement à l'intérieur du vissage.

9. Palier de rotor selon l'une des revendications 1 à 8, **caractérisé en ce que,** pour décharger le deuxième joint (11), il est prévu entre le premier (7) et le deuxième joint (11) au moins un autre élément d'étanchéité (22) qui divise l'espace annulaire (14).

10. Palier de rotor selon la revendication 9, **caractérisé en ce que** le deuxième joint (11) et l'autre élément d'étanchéité (22) sont réalisés sous forme de joints à lèvre agissant axialement avec une précontrainte de lèvre orientée axialement de manière identique ou opposée.

11. Palier de rotor selon la revendication 3 et la revendication 9 ou 10, **caractérisé en ce qu'**un autre écoulement (27) est prévu dans la garniture annulaire (10) entre l'autre élément d'étanchéité (22) et le deuxième joint (11).

12. Palier de rotor selon l'une des revendications 1 à 11, **caractérisé en ce que** la bague extérieure (3) présente des alésages de fixation (23) pour la fixation du palier de rotor (1) sur un rotor (130) d'une éolienne (100) au moyen de vis de fixation (28) et la bague d'étanchéité (8) s'étend dans la direction radiale (R) jusque dans la zone des alésages de fixation (23) pour le serrage de la bague d'étanchéité (8) lors du montage du rotor (130).

13. Palier de rotor selon l'une des revendications 1 à 12, **caractérisé en ce que** la bague d'étanchéité (8) est réalisée en acier et est trempée au moins dans la zone de la première surface de roulement de joint (9).

14. Palier de rotor selon l'une quelconque des revendications 1 à 13, **caractérisé en ce que** la garniture annulaire (10) est fabriqué dans un matériau plastique.

15. Palier de rotor selon l'une des revendications 1 à 14, **caractérisé en ce qu'**il est prévu comme rangées d'éléments roulants (5) deux rangées de rouleaux coniques qui sont disposés en X ou en O entre la bague intérieure (2) et la bague extérieure (3).

16. Eolienne comprenant une tour (110), une nacelle (120) fixée à la tour (110) et un rotor (130) monté rotatif sur la nacelle (120), **caractérisée en ce que** le rotor (130) est monté sur la nacelle (120) par l'intermédiaire d'un palier de rotor (1) selon l'une des revendications 1 à 15, le rotor (130) étant solidaire en rotation de la bague extérieure (3) et la nacelle (120) de la bague intérieure (2).
